# EUROPÄISCHE PATENTSCHRIFT

(11) **EP 2 483 119 B1**
(45) Veröffentlichungstag und Bekanntmachung des Hinweises auf die Patenterteilung: **27.08.2014**
(21) Anmeldenummer: 10751622.1
(22) Anmeldetag: 31.08.2010
(51) Int. Cl.: B60W 30/182, B60W 30/18, B60W 50/08, B60W 10/02, B60W 10/06, B60W 10/11, F16H 59/02, F16H 59/18

(54) **VERFAHREN ZUM STEUERN UND/ODER REGELN EINES AUTOMATISIERTEN GETRIEBES**
METHOD FOR CONTROLLING AND/OR REGULATING AN AUTOMATED TRANSMISSION
PROCÉDÉ DE COMMANDE ET/OU DE RÉGULATION D'UNE BOÎTE DE VITESSES AUTOMATISÉE

(30) Priorität: 29.09.2009 DE 102009045091
(43) Veröffentlichungstag der Anmeldung: 08.08.2012
(73) Patentinhaber: ZF Friedrichshafen AG, 88038 Friedrichshafen (DE)
(72) Erfinder: MÜLLER, Lutz, 88634 Herdwangen-Schönach (DE); STAUDINGER, Joachim, 88214 Ravensburg (DE)
(86) Internationale Anmeldenummer: PCT/EP2010/062677
(87) Internationale Veröffentlichungsnummer: WO 2011/039018

(56) Entgegenhaltungen:
- DE-A1- 19 507 622
- DE-A1-102008 042 959
- US-A- 4 454 789

## Beschreibung

Die vorliegende Erfindung betrifft ein Verfahren zum Steuern und/oder Regeln eines automatisierten Getriebes gemäß der im Oberbegriff des Patentanspruches 1 näher definierten Art.

Aus der Fahrzeugtechnik sind automatisierte Getriebe bekannt. Derartige Getriebe können unter anderem in einem Automatikmodus betrieben werden, indem die Betriebsweise des Getriebes automatisch durch die Getriebesteuerung realisiert wird. Es ist auch bekannt, dass ein so genannter manueller Modus verfügbar ist, in dem der Fahrer durch Betätigung der so genannten Tipptasten manuell einen höheren oder niedrigeren Gang wählen kann.

Im Rahmen des Automatikmodus kann unter bestimmten Bedingungen eine so genannte Rollfunktion oder Segelfunktion durch die Getriebesteuerung aktiviert werden, um dadurch Kraftstoff einzusparen. Bei aktivierter Rollfunktion wird der Antriebsstrang geöffnet und der Antriebsmotor im Leerlauf betrieben. Bei aktivierter Segelfunktion kann zusätzlich der Motor abgestellt werden, um den Kraftstoffbedarf weiter zu reduzieren. Sobald die zum Aktivieren der Rollfunktion oder der Segelfunktion erforderlichen Bedingungen nicht mehr vorliegen, wird die Rollfunktion oder die Segelfunktion automatisch durch die Getriebesteuerung beendet.

Beispielsweise aus der Druckschrift DE 102 21 701 A1 ist ein Steuerverfahren für Kraftfahrzeuge mit automatisierter Kupplungsvorrichtung bekannt. Wenn keine Bremsbetätigung oder keine Gaspedalbetätigung für eine vorbestimmte Zeitspanne erfolgt, wird automatisch eine Segelphase aktiviert. Sobald das Steuerverfahren erkennt, dass eine der Bedingungen nicht mehr vorliegen, wird die Segelphase automatisch beendet. Nach dem Beenden der Segelphase wird durch das Steuerverfahren eine Drehzahlvorgabe oder eine Drehmomentvorgabe ausgegeben, um den Verbrennungsmotor auf die Solldrehzahl automatisch zu steuern. Sobald im Rahmen des Steuerverfahrens ermittelt wird, dass die Motordrehzahl und die Getriebedrehzahl synchronisiert sind, wird die Kupplung automatisch wieder geschlossen.

Aus der Druckschrift DE 10 2007 035 426 A1 sind eine Anzeigeeinrichtung und ein Betriebsverfahren für ein Kraftfahrzeug mit einem Antriebsstrang bekannt, wobei die Anzeigeeinrichtung dem Fahrer die Antriebszustände, wie zum Beispiel den Zustand Segeln signalisiert. Damit kann der Fahrer unterstützt werden, den energieeffizienten Segelbetrieb möglichst oft zu nutzen.

Bei den bekannten Verfahren besteht der Nachteil, dass die Segelfunktion lediglich automatisch aktiviert oder deaktiviert werden kann, indem versucht wird, die Voraussetzungen zum Aktivieren oder zum Deaktivieren der Segelfunktion zu realisieren. Ein direkter manueller Einfluss besteht für den Fahrer somit nicht. Zudem hat der Fahrer im Automatikmodus nach dem Beenden der Segelfunktion oder der Rollfunktion keinen Einfluss auf die weitere Schaltstrategie der Getriebesteuerung.

Die DE 195 07 622 A1 offenbart ein Verfahren gemäß dem Oberbegriff des Anspruchs 1, bei welchem zur Unterbrechung einer Freilaufphase ein Handschalter durch den Fahrer betätigt werden kann bzw. die Beendigung der Freilaufphase automatisch erfolgt, wenn während der Fahrt ein Fahrpedal und ein Gangwahlhebel unbetätigt sind und eine Fahrbremse betätigt wird.

Der vorliegenden Erfindung liegt die Aufgabe zu Grunde, ein Verfahren der eingangs beschriebenen Gattung vorzuschlagen, bei dem der Fahrer einen direkten Einfluss auch im Automatikmodus bezogen auf die Segel- oder Rollfunktion hat.

Diese Aufgabe wird erfindungsgemäß durch die Merkmale des Patentanspruches oder 2 gelöst.

Demzufolge wird ein Verfahren zum Steuern und/oder Regeln eines automatisierten Getriebe seines Fahrzeuges vorgeschlagen, bei dem in einem Automatikmodus unter vorbestimmten Bedingungen eine Rollfunktion oder eine Segelfunktion des Fahrzeuges aktiviert wird, bei der der Antriebsstrang geöffnet und der Antriebsmotor im Leerlauf betrieben wird oder teilweise abgeschaltet wird, wobei die Rollfunktion oder die Segelfunktion automatisch beendet wird, wenn zumindest eine der vorbestimmten Bedingungen nicht mehr erfüllt werden.

Erfindungsgemäß ist vorgesehen, dass die Rollfunktion oder die Segelfunktion auch bewusst durch den Fahrer manuell beendet werden kann und dass der Fahrer eine beeinflussbare Schaltstrategie nach dem Beenden der Rollfunktion oder der Segelfunktion auslösen kann.

Auf diese Weise hat der Fahrer nicht nur, wie bereits bekannt, im manuellen Modus, sondern auch im Automatikmodus beziehungsweise Automatikschaltprogramm die Möglichkeit, bewusst auf die Betriebsweise des Getriebes Einfluss zu nehmen und somit der Getriebesteuerung eine bestimmte Schaltstrategie vorzugeben.

Im Rahmen der Erfindung ist vorgesehen, dass der Fahrer einen bestimmten Schalter zum Beispiel den Fahrschalter beziehungsweise Lenkstockschalter, entsprechend betätigt, um dadurch der Getriebesteuerung seinen Wunsch zur Beeinflussung der Betriebsweise zu signalisieren. Durch die Betätigung des Schalters kann die aktive Rollfunktion oder Segelfunktion bewusst beendet werden und eine dem entsprechenden Schalter zugeordnete Schaltstrategie ausgelöst werden, um den Antriebsstrang wieder zu schließen.

Erfindungsgemäß kann durch die Betätigung einer so genannten Tipp-Minus-Taste während einer aktiven Rollfunktion oder Segelfunktion diese Funktion verlassen beziehungsweise beendet werden und ein Gang für eine maximale Beschleunigung des Fahrzeuges ausgewählt und geschaltet werden. Die Getriebesteuerung wählt dann zunächst anhand der momentan vorliegenden Fahrzustandsparameter einen entsprechenden Gang aus, der dem Drehmomentmaximum des Motors möglichst nahe kommt.

Eine erfindungsgemäße Alternative zur bewussten Beeinflussung der Betriebsweise des Getriebes sieht vor, dass durch die Betätigung der Tipp-Minus-Taste sofort die aktivierte Rollfunktion oder Segelfunktion beendet wird und alternativ ein Gang ausgewählt und geschaltet wird, der eine maximale Motorbremswirkung realisiert. Somit kann die Getriebesteuerung durch den Fahrer derart beeinflusst werden, dass nach dem Verlassen der Rollfunktion oder der Segelfunktion ein Gang gewählt wird, der die Motordrehzahl in einen definierbaren applizierbaren, hohen Drehzahlbereich bringt, so dass die gewünschte mit steigender Motordrehzahl ebenfalls ansteigende Motorbremswirkung realisiert wird.

Eine erfindungsgemäße Alternative zur bewussten Beeinflussung der Betriebsweise des Getriebes sieht vor, dass der Fahrer durch die Betätigung einer Tipp-Plus-Taste die aktive Rollfunktion oder Segelfunktion sofort beendet und der Getriebesteuerung signalisiert, dass ein Gang geschaltet werden soll, der einen möglichst verbrauchsarmen Betrieb des Fahrzeuges realisiert. Dazu kann ein Drehzahlbereich vorgegeben werden, in dem der Motor nach dem Schließen des Antriebsstranges betrieben werden soll. Dieser Drehzahlbereich ist applizierbar und befindet sich üblicherweise im unteren Bereich der Drehzahl.

Mit dem erfindungsgemäßen Verfahren kann somit über z. B. eine Tipphebelbedienung während einer aktiven Rollfunktion oder Segelfunktion durch den Fahrer bewusst Einfluss auf die Betriebsweise des Getriebes genommen werden und neben dem bewussten Beenden der aktiven Funktion auch eine von dem Fahrer gewünschte Schaltstrategie zum Schließen des Antriebsstranges aktiviert werden.

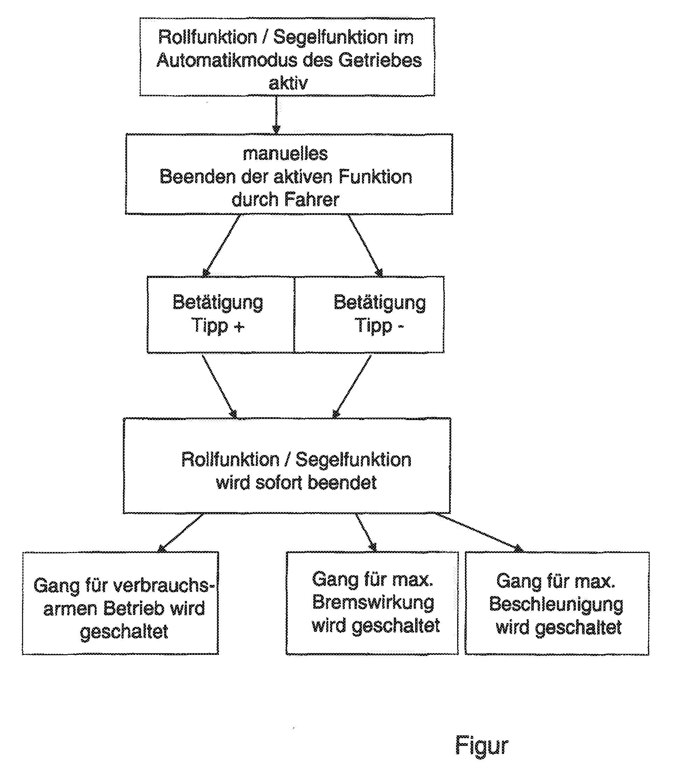

Nachfolgend wird die vorliegende Erfindung anhand der Zeichnung weiter erläutert. Die einzige Figur der Erfindung zeigt ein mögliches Ablaufdiagramm einer Ausführungsvariante des erfindungsgemäßen Verfahrens zum Steuern und/oder Regeln eines automatisierten Getriebes eines Fahrzeuges.

Das erfindungsgemäße Verfahren sieht bei aktivierter Segelfunktion oder Rollfunktion im Automatikmodus des Getriebes vor, dass der Fahrer durch bewusstes Handeln die aktivierte Rollfunktion oder Segelfunktion beenden kann und eine gewünschte Schaltstrategie auslösen kann.

Dazu kann der Fahrer zum Beispiel die Tipp-Plus-Taste oder die Tipp-Minus-Taste betätigen. Wenn der Fahrer die Tipp-Plus-Taste betätigt, wird die Rollfunktion oder die Segelfunktion sofort beendet und ein Gang für einen verbrauchsarmen Betrieb durch die Getriebesteuerung ausgewählt und geschaltet.

Wenn der Fahrer die Tipp-Minus-Taste betätigt, wird die Rollfunktion oder die Segelfunktion ebenfalls sofort beendet und ein Gang geschaltet, der eine maximale Motorbremswirkung des Fahrzeuges ermöglicht. Alternativ kann auch vorgesehen sein, dass bei der Betätigung der Tipp-Minus-Taste ein Gang durch die Getriebesteuerung ausgewählt wird, der eine maximale Beschleunigung bei dem Fahrzeug ermöglicht.

## Patentansprüche

1. Verfahren zum Steuern und/oder Regeln eines automatisierten Getriebes eines Fahrzeuges, bei dem in einem Automatikmodus unter vorbestimmten Bedingungen eine Rollfunktion oder eine Segelfunktion des Fahrzeuges aktiviert wird, bei der der Antriebsstrang geöffnet und der Antriebsmotor im Leerlauf betrieben wird oder zeitweise abgeschaltet wird, wobei die Rollfunktion oder die Segelfunktion automatisch beendet wird, wenn zumindest eine der vorbestimmten Bedingungen nicht mehr erfüllt werden, wobei die Rollfunktion oder die Segelfunktion auch manuell durch den Fahrer beendet wird und eine manuell beeinflussbare Schaltstrategie ausgelöst wird, **dadurch gekennzeichnet, dass** durch die Betätigung einer Tipp-Minus-Taste eines Fahrschalters sofort die Rollfunktion oder die Segelfunktion beendet wird und ein Gang für eine maximale Beschleunigung des Fahrzeuges oder ein Gang, der eine maximale Motorbremswirkung realisiert, geschaltet wird.

2. Verfahren zum Steuern und/oder Regeln eines automatisierten Getriebes eines Fahrzeuges, bei dem in einem Automatikmodus unter vorbestimmten Bedingungen eine Rollfunktion oder eine Segelfunktion des Fahrzeuges aktiviert wird, bei der der Antriebsstrang geöffnet und der Antriebsmotor im Leerlauf betrieben wird oder zeitweise abgeschaltet wird, wobei die Rollfunktion oder die Segelfunktion automatisch beendet wird, wenn zumindest eine der vorbestimmten Bedingungen nicht mehr erfüllt werden, wobei die Rollfunktion oder die Segelfunktion auch manuell durch den Fahrer beendet wird und eine manuell beeinflussbare Schaltstrategie ausgelöst wird, **dadurch gekennzeichnet, dass** durch die Betätigung einer Tipp-Plus-Taste eines Fahrschalters die Rollfunktion oder die Segelfunktion sofort beendet wird und ein Gang geschaltet wird, der einen verbrauchsarmen Betrieb ermöglicht.

## Claims

1. Method for performing open-loop and/or closed-loop control of an automated transmission of a vehicle, in which, under predetermined conditions in an automatic mode, a rolling function or a coasting function of the vehicle is activated in which the drive train is opened and the drive engine is operated in the idling mode or is temporarily switched off, wherein the rolling function or the coasting function is ended automatically if at least one of the predetermined conditions is no longer met, wherein the rolling function or the coasting function is also ended manually by the driver and a switching strategy which can be influenced manually is triggered, **characterized in that** by actuating a tip-minus key of a drive switch the rolling function or the coasting function is ended immediately and a gearspeed for maximum acceleration of the vehicle or a gearspeed which implements a maximum engine-breaking effect is switched.

2. Method for performing open-loop and/or closed-loop control of an automated transmission of a vehicle, in which, under predetermined conditions in an automatic mode, a rolling function or a coasting function of the vehicle is activated in which the drive train is opened and the drive engine is operated in the idling mode or is temporarily switched off, wherein the rolling function or the coasting function is ended automatically if at least one of the predetermined conditions is no longer met, wherein the rolling function or the coasting function is also ended manually by the driver and a switching strategy which can be influenced manually is triggered, **characterized in that** by actuating a tip-plus key of a drive switch the rolling function or the coasting function is ended immediately and a gearspeed is switched which permits low-consumption operation.

## Revendications

1. Procédé de commande et/ou de régulation d'une boîte de vitesse automatisée d'un véhicule, dans lequel, dans un mode automatique, dans des conditions prédéterminées, une fonction de roulage ou une fonction de roue libre du véhicule est activée, dans laquelle la chaîne cinématique est ouverte et le moteur d'entraînement fonctionne en marche à vide ou est temporairement coupé, la fonction de roulage ou la fonction de roue libre étant terminée automatiquement lorsqu'au moins l'une des conditions prédéterminées n'est plus satisfaite, la fonction de roulage ou la fonction de roue libre étant aussi terminée manuellement par le conducteur et une stratégie de commutation pouvant être influencée de manière manuelle étant déclenchée, **caractérisé en ce que** par l'actionnement d'une touche basculante "moins" d'un commutateur de conduite, la fonction de roulage ou la fonction de roue libre est immédiatement terminée et une vitesse pour une accélération maximale du véhicule ou une vitesse qui réalise un effet de frein moteur maximal est enclenchée.

2. Procédé de commande et/ou de régulation d'une boîte de vitesse automatisée d'un véhicule, dans lequel, dans un mode automatique, dans des conditions prédéterminées, une fonction de roulage ou une fonction de roue libre du véhicule est activée, dans laquelle la chaîne cinématique est ouverte et le moteur d'entraînement fonctionne en marche à vide ou est temporairement coupé, la fonction de roulage ou la fonction de roue libre étant terminée automatiquement lorsqu'au moins l'une des conditions prédéterminées n'est plus satisfaite, la fonction de roulage ou la fonction de roue libre étant aussi terminée manuellement par le conducteur et une stratégie de commutation pouvant être influencée de manière manuelle étant déclenchée, **caractérisé en ce que** par l'actionnement d'une touche basculante "plus" d'un commutateur de conduite, la fonction de roulage ou la fonction de roue libre est immédiatement terminée et une vitesse est enclenchée, laquelle permet un fonctionnement à faible consommation.
